# EUROPÄISCHE PATENTSCHRIFT

(11) **EP 1 226 669 B1**
(45) Veröffentlichungstag und Bekanntmachung des Hinweises auf die Patenterteilung: **10.03.2004**
(21) Anmeldenummer: 00987074.2
(22) Anmeldetag: 03.11.2000
(51) Int. Cl.: H04B 10/155

(54) **VERFAHREN UND ANORDNUNG ZUR OPTIMIERUNG EINES MIT EINEM BINÄREN DATENSIGNAL MODULIERTEN OPTISCHEN ÜBERTRAGUNGSSIGNALS**
METHOD AND DEVICE FOR OPTIMIZING AN OPTICAL TRANSFER SIGNAL MODULATED WITH A BINARY DATA SIGNAL
PROCEDE ET DISPOSITIF D'OPTIMISATION D'UN SIGNAL DE TRANSFERT OPTIQUE MODULE AVEC UN SIGNAL DE DONNEES BINAIRE

(30) Priorität: 05.11.1999 DE 19953332
(43) Veröffentlichungstag der Anmeldung: 31.07.2002
(73) Patentinhaber: SIEMENS AKTIENGESELLSCHAFT, 80333 München (DE)
(72) Erfinder: GOTTWALD, Erich, 83607 Holzkirchen (DE); GLINGENER, Christoph, 83620 Feldkirchen-Westerham (DE)
(86) Internationale Anmeldenummer: PCT/DE2000/003869
(87) Internationale Veröffentlichungsnummer: WO 2001/033745

(56) Entgegenhaltungen:
- US-A- 5 629 792
- US-A- 5 673 129
- US-A- 5 710 653

## Beschreibung

Bei optischen Übertragungssystemen mit Datenraten von 10 Gbit/s und mehr werden Mach-Zehnder-Modulatoren (MZI-Mach-Zehnder-Interferometer) eingesetzt, da bei diesen hohen Datenraten beim heutigen Stand der Technik weder die direkte Modulation eines Lasers noch eine Modulation mit Elektroabsorptionsmodulatoren zweckmäßig ist. MZI-Modulatoren benötigen im allgemeinen neben dem Modulationssignal eine Bias-Spannung zur Einstellung des Arbeitspunktes, um ein symmetrisches Ausgangssignal und damit eine symmetrische Augenform des empfangenen Signals zu erreichen. Ein Abweichen des Arbeitspunktes von diesem Wert führt zu Verzerrungen des optischen Sendesignals und damit zu größeren Fehlerraten bzw. zu einer verminderten Reichweite. Wie alle Interferometer-Anordnungen, die extrem empfindlich auf geringste optische Weglängenänderung reagieren, ändert sich bei den meisten verfügbaren Modulatoren mit den Umgebungsbedingungen auch der Arbeitspunkt.

Ein MZI-Modulator ist beispielsweise im "Designer's Guide to External Modulation", UTP, 1289 Blue Hills Avenue, Bloomfield, Connecticut, Seiten 4-6 beschrieben. Bei voller Aussteuerung des Modulators führt eine Veränderung des Arbeitspunktes zur Übersteuerung, wodurch beim Übergang von Sperren nach Durchschalten, von "0" nach "1", trotz wachsendem Steuersignal die optische Leistung nach anfänglichem Ansteigen wieder abfällt. Ein gesendetes "1-Bit" erhält bei Übersteuerung eine Überhöhung im Bereich der ansteigenden 1-Flanke, dies bedeutet eine höherfrequente Struktur, bei der ein Teil der spektralen Leistung bei höheren Frequenzen liegt, insbesondere etwa bei der zweifachen Grundfrequenz des Datensignals bzw. bei der Datenrate.

Aus der Patentschrift US 5 710 653 ist ein Übertragungssystem mit einem Modul zur externen Modulation eines Signals bekannt, bei dem Oberwellen des modulierten Signals unterdrückt werden. Eine erste Methode verwendet. zwei parallel angeordnete Mach-Zender- Interferometer als Modulatoren, deren Eingängen das zu modulierende Signal mit unterschiedlichen Amplituden (80% und 20%) zugeführt wird, und deren zwei modulierte Ausgangssignale derart zusammengefasst werden, daß aus dem zweiten Ausgangssignal eine Oberwelle von der Grundwelle isoliert, invertiert und weiterhin so verstärkt wird, daß durch Addition zwischen dem ersten modulierten Ausgangssignal und der verarbeiteten isolierten Oberwelle des zweiten modulierten Ausgangssignals die Oberwellen des resultierenden modulierten Signals sich kompensieren. Bei der zweiten Methode wird nur ein Modulator zur Unterdrückung von Oberwellen der zweiten und dritten Ordnung des modulierten Signals verwendet. Hier wird ein "distortion network" für die Unterdrückung der Oberwelle der dritten Ordnung zusätzlich zur Regelung des Arbeitspunktes des Modulators benötigt. Durch diese zwei Methoden werden Oberwellen der dritten Ordnung unterdrückt. Eine zusätzliche Regelschleife zur Einstellung des Arbeitspunktes der Modulator(en) in Phasen-Quadratur ist für die Eliminierung der Oberwelle der zweiten Ordnung vorgesehen.

Aus der Patentschrift US 5 629 792 ist eine weitere Anordnung und Methode zur Modulation eines Signals mit einer Regelung des Arbeitspunktes des Modulators bekannt. Die Regelung steuert den Arbeitspunkt des Modulators durch eine Leistungsmessung der Grundwelle des vom Modulator ausgehenden modulierten Signals. Die Einflüsse von störenden Oberwellen im modulierten Signal werden mit dieser Regelung nicht beseitigt und auch nicht minimiert.

Aufgabe der Erfindung ist es, ein Verfahren und eine Anordnung zur Amplitudenmodulation eines optischen Signals mit einem binären Datensignal mit möglichst einfachen Mitteln so zu verbessern, dass bei optimaler Nutzung der Grundwelle eine möglichst optimale Unterdrückung von Oberwellen erzielt werden kann.

Diese Aufgabe wird durch ein Verfahren nach Anspruch 1. gelöst. Eine Anordnung zur Realisierung des Verfahrens ist in dem unabhängigen Anspruch 8 angegeben.

Vorteilhafte Weiterbildungen der Erfindung sind in den Unteransprüchen angegeben.

Die Lösung dieser Aufgabe ergibt sich, ausgehend von den Merkmalen des Oberbegriffs des Anspruchs 1 dadurch, daß aus den Signalen der jeweils herausgefilterten Grundwelle und mindestens einer Oberwelle je ein Regelsignal abgeleitet wird und diese Regelsignale den Arbeitspunkt des Modulators derart regeln, daß die mindestens eine Oberwelle eine minimale Amplitude oder Leistung und die Grundwelle (GW) eine maximale Amplitude oder Leistung erreichen.

Der Vorteil dieser Lösung besteht darin, daß für die Unterdrückung von Oberwellen ein im Vergleich zum Stand der Technik wesentlich geringerer Aufwand erforderlich ist.

Das Verfahren nutzt einen bei Übersteuerung des Modulators auftretenden Effekt für eine Regelung des Arbeitspunktes aus. Vorteilhaft ist hier insbesondere die Kombination der Arbeitspunktregelung mit einer Regelung des Modulationssignals. Alle wesentlichen Parameter werden durch die Regelung konstant gehalten.

Vorteilhaft ist auch, wenn die Regelkriterien auf der Empfangsseite gewonnen und über einen Servicekanal übertragen werden. Auf diese Weise können auch durch die Übertragungsstrecke verursachte Verzerrungen teilweise kompensiert werden.

Die Erfindung wird anhand von Ausführungsbeispielen näher erläutert. Dabei zeigen
Figur 1 ein Prinzipschaltbild einer erfindungsgemäßen Anordnung,
Figur 2 den Verlauf der Regelspannungen und
Figur 3 ein Variante der erfindungsgemäßen Anordnung.

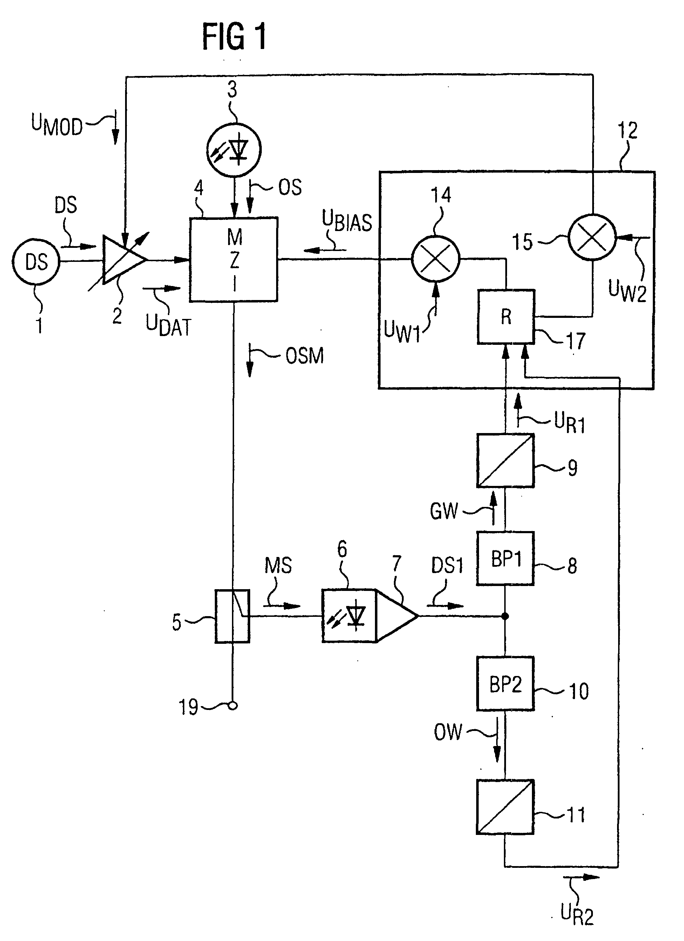

Die in **Figur 1** dargestellte Anordnung enthält einen Mach-Zehnder-Modulator (MZI) 4, dem von einem Laser 3 ein optisches Signal OS zugeführt wird. Der Modulator 4 wird mit einem Datensignal DS moduliert, das von einer Datenquelle über einen regelbaren Verstärker 2 als Modulationssignal U_{DAT} zugeführt wird. Das modulierte optische Übertragungssignal OSM wird ausgesendet. Über einen optischen Splitter 5 wird ein geringer Teil des Signals einem optoelektrischen Wandler 6 mit nachgeschaltetem Verstärker 7 zugeführt und demoduliert. Das so rückgewonnene elektrische Datensignal DS1 beinhaltet im wesentlichen das Modulationssignal U_{DAT} bzw. Datensignal DS. Das Datensignal DS1 wird über einen Verstärker 7 zwei Filtern, den Bandpässen 8 und 10, zugeführt. Der erste Bandpaß 8 filtert die Grundwelle GW des Datensignals DS1 aus, d.h., seine Durchlaßfrequenz liegt bei der halben Bitrate. Eine tiefpaßgefilterte 01-Bitfolge ergibt im wesentlichen eine Sinusspannung mit der Frequenz der halben Datenrate (statt des NRZ-Datensignals kann auch ein abgeleitetes Datensignal verwendet werden). Die Ausgangsspannung des ersten Bandpasses 8 wird direkt oder über einen Meßwandler 9, z.B. einem Gleichrichter oder Leistungsmesser, als Regelsignal U_{R1} einer Regeleinrichtung 12 zugeführt. In dem Ausführungsbeispiel ist ein zweiter Bandpaß 10 vorgesehen, der auf eine Oberwelle OW, vorzugsweise die erste, abgestimmt ist. Auch seine Ausgangsspannung wird direkt oder über einen zweiten Meßwandler 11 als weiteres Regelsignal U_{R2} der Regeleinrichtung 12 zugeführt. Es können auch zusätzliche Bandpässe zum Herausfiltern weiterer Oberwellen vorgesehen sein, deren Ausgangsspannungen zusammengefaßt werden können. Die Regeleinrichtung liefer über einen Regler 17 ein Steuersignal U_{BIAS}, das den Arbeitspunkt des Modulators 4 bestimmt.

Wie bereits erwähnt, filtert der erste Bandpaß BP1 die Grundwelle GW heraus. Abweichungen vom Arbeitspunkt bzw. Übersteuern durch ein zu großes Modulationssignal führen zu einer Verringerung der Amplitude der Grundwelle (Sinussignal), da aufgrund der dann entstehenden Oberwellen die Spektralkomponente der Grundwelle abnimmt. Entsprechendes gilt für das aus dem Sinussignal gewonnene Regelsignal U_{R1}. Umgekehrt ist der Verlauf bei den Oberwellen. Deren Amplituden und damit die Amplituden der Regelsignale U_{R2}, ... nehmen bei Übersteuerung zu.

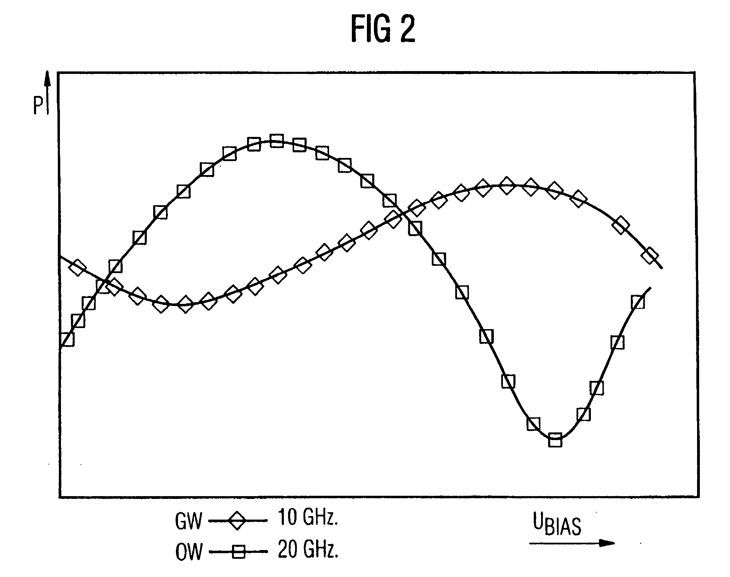

Das in **Figur 2** dargestellte Diagramm zeigt die Abhängigkeit der Leistungen P von Grundwelle GW und erster Oberwelle OW vom Arbeitspunkt des Modulators. Ein deutliches Optimum der Leistung (Amplitude) der Grundwelle liegt im Bereich des idealen Arbeitspunktes. Die Amplitude der Oberwelle (der Oberwellen) weist hier ein vom Arbeitspunkt stärker abhängiges Minimum auf, das sich besonders gut zur Optimierung des Arbeitspunktes eignet. Besonders vorteilhaft ist die Kombination beider Regelsignale U_{R1} und U_{R2} zur Arbeitpunktregelung, beispielsweise durch Addition, wobei eines dieser Signale invertiert wird, da dies zu einem steileren Verlauf der Regelkennlinie führt. In Figur 2 sind die Hauptwerte für das Arbeitspunkt-Steuersignal (Vorspannung) dargestellt. Das Optimum liegt bei ca. 4,8 V.

Die Regeleinrichtung kann gleichzeitig verwendet werden, um das von der Datenquelle abgegebene Datensignal DS durch Steuern des Verstärkers 2 mit Hilfe eines weiteren Steuersignals U_{MOD} in ein optimales Modulationssignal U_{DAT} umzusetzen, das zu einem Übertragungssignal mit maximaler Amplitude und minimalem Oberwellenanteil führt (maximalem Modulationsgrad). Für die Maximierung des Modulationsssignals U_{DAT} ist es ausreichend, die Grundwelle für die Regelung zu verwenden.

Bei einem Regelvorgang können von der Regeleinrichtung versuchsweise Änderungen der Steuersignale U_{BIAS} und U_{MOD} in beiden Richtungen veranlaßt werden, um die jeweilige optimale Einstellung zu erreichen. Der Arbeitspunkt U_{BIAS} (Steuersignal/Vorspannung) und das Modulationssignal U_{DAT} können beispielsweise alternierend eingestellt werden. Ebenso kann durch Wobbeln des Arbeitspunktes bzw. der Amplitude des Modulationssignals (periodisches Ändern um einen kleinen Betrag durch Wobbelspannungen U_{W1}, U_{W2}) das Vorzeichen einer Regelabweichung ermittelt werden und die Regelung nach dem Lock-In-Prinzip erfolgen.

Selbstverständlich ist zusätzlich auch eine Regelung der Amplitude des Lasersignals OS und damit der Amplitude des Übertragungssignals OSM möglich.

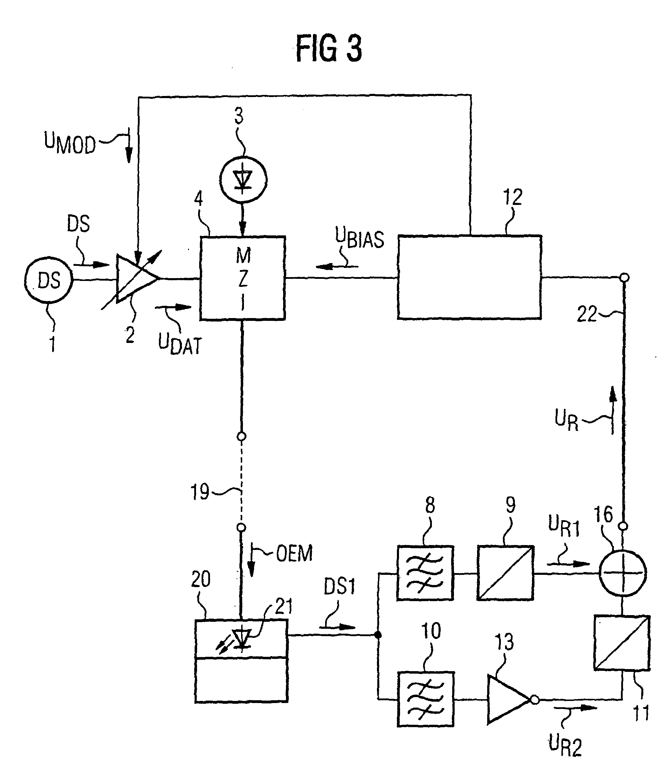

In **Figur 3** ist eine Variante dargestellt, bei der die Regelsignale U_{R1}, U_{R2} am Ende einer Übertragungsstrecke (empfangsseitig) aus dem Empfangssignal OEM abgeleitet werden. Die Regelung kann hierdurch die Leitungseigenschaften mit berücksichtigen. Die Demodulation des Empfangssignals OEM erfolgt in einer Empfangseinrichtung 20. Das demodulierte Datensignal DS1 wird wieder über Filter 8, 10 ausgewertet und durch die Meßwandler 9, 11 in Regelsignale U_{R1}, U_{R2} umgesetzt, die nach Invertierung eines Regelsignals über einen invertierenden Verstärker 13 in einem Addierer 16 zu einem resultierenden Regelsignal U_{R} zusammengefaßt werden.

Die Regeleinrichtung 12 kann empfangs- oder sendeseitig angeordnet sein. In diesem Ausführungsbeispiel wird das zusammengefaßte Regelsignal U_{R} über einen Service-Kanal 22 zur sendeseitig angeordneten Regeleinrichtung 12 übertragen, um den Arbeitspunkt und/oder die Amplitude des Modulationssignals zu optimieren.

## Patentansprüche

1. Verfahren zur Amplitudenmodulation eines optischen Signals (OS) mit einem binären Datensignal (DS), bei dem diese Signale einem Modulator (4) zur Erzeugung eines Übertragungssignals (OSM) zugeführt werden, dessen Arbeitspunkt (U_{BIAS}) einstellbar ist, wobei ein aus dem Übertragungssignal (OSM) abgezweigtes Meßsignal (MS) oder das Übertragungssignal (OSM) demoduliert und in ein rückgewonnenes Datensignal (DS1) umgesetzt wird, aus dem die Grundwelle (GW) und mindestens eine Oberwelle (OW) herausgefiltert werden,
**dadurch gekennzeichnet,**
**daß** aus den Signalen der jeweils herausgefilterten Grundwelle (GW) und mindestens einer Oberwelle (OW) je ein Regelsignal (U_{R1},U_{R2}) abgeleitet wird und diese Regelsignale den Arbeitspunkt (U_{BIAS}) des Modulators (4) derart regeln, daß die mindestens eine Oberwelle (OW) eine minimale Amplitude oder Leistung und die Grundwelle (GW) eine maximale Amplitude oder Leistung erreichen.

2. Verfahren nach Anspruch 1,
**dadurch gekennzeichnet,**
**daß** sowohl die Grundwelle (GW) als auch die mindestens eine Oberwelle (OW) aus dem rückgewonnenen Datensignal (DS1) selektiert werden und daß hieraus abgeleitete Regelsignale (U_{R1}, U_{R2}) zur optimalen Einstellung des Arbeitspunktes (U_{BIAS}) verwendet werden.

3. Verfahren nach einem der vorhergehenden Ansprüche,
**dadurch gekennzeichnet,**
**daß** das Datensignal (DS) in ein Modulationssignal (U_{DAT}) umgesetzt wird, das dem Modulator (4) zugeführt wird, und daß die Amplitude des Modulationssignals (U_{DAT}) auf einen Wert geregelt wird, bei dem die Grundwelle (GW) oder ein aus Grundwelle (GW) und invertierter Oberwelle (OW) gebildetes Regelsignal (U_{R}) ein Maximum erreicht.

4. Verfahren nach einem der vorhergehenden Ansprüche,
**dadurch gekennzeichnet,**
**daß** versuchsweise der Arbeitspunkt (U_{BIAS}) oder die Amplitude des Modulationssignals (U_{MOD}) geändert wird, bis die Grundwelle einen Maximalwert oder bis die Grundwelle (GW) einen Maximalwert und gleichzeitig die Oberwelle (OW) einen Minimalwert erreicht hat.

5. Verfahren nach Anspruch 4,
**dadurch gekennzeichnet,**
**daß** abwechselnd der Arbeitspunkt (U_{BIAS}) und das Modulationssignal (U_{DAT}) optimal eingestellt wird.

6. Verfahren nach einem der vorhergehenden Ansprüche,
**dadurch gekennzeichnet,**
**daß** das Arbeitspunkt-Steuersignal (U_{BIAS}) und die Amplitude des Modulationssignals (U_{DAT}) optimiert werden, indem diese Signale gewobbelt werden und jeweils eine Regelung nach dem Lock-In-Prinzip erfolgt.

7. Verfahren nach einem der vorhergehenden Ansprüche,
**dadurch gekennzeichnet,**
**daß** das rückgewonnene Datensignal (DS1) durch Demodulation eines optischen Empfangssignal (OEM) erzeugt wird, daß aus diesen die Regelsignale (U_{R1}, U_{R2}) abgeleitet werden und daß die Regelsignale entweder zur sendeseitig angeordneten Regeleinrichtung (12) geführt werden, von der Steuersignale (U_{BIAS}, U_{DAT}) über einen Service-Kanal (22) zum Modulator (4) übertragen werden, oder zu einer empfangsseitig angeordneten Regeleinrichtung übertragen werden, die den Modulator (4) über einen Service-Kanal (22) steuert.

8. Anordnung zur Amplitudenmodulation eines optischen Signals (OS) mit einem binären Datensignal (DS), die einen Modulator (4) mit einstellbarem Arbeitspunkt aufweist, an dessen Ausgang ein moduliertes Übertragungssignal (OSM) abgegeben wird,
wobei ein Regelkreis vorgesehen ist, der im wesentlichen enthält:
einen Demodulator (6), dem das Übertragungssignal (OSM) oder ein dem Übertragungssignal (OSM) entsprechendes Meßsignal (MS) zugeführt wird, um daraus ein elektrisches Datensignal (DS1) zurückzugewinnen,
ein Filter (BP1), das die Grundwelle (GW) des rückgewonnenen Datensignals (DS1) selektiert,
mindestens ein zweites Filter (BP2), das mindestens eine Oberwelle (OW) des rückgewonnenen Datensignals (DS1) selektiert und
mindestens einen Meßwandler (9, 11), um aus dem Ausgangssignal der Filter (BP1, BP2) je ein Regelsignal (U_{R1} U_{R2}) zu gewinnen,
**gekennzeichnet durch**
eine Regeleinrichtung (12), der die Regelsignale (U_{R1} U_{R2}) zugeführt werden und die den Arbeitspunkt (U_{BIAS}) des Modulators (4) derart regelt, daß
- die Amplitude der Grundwelle (GW) einen Maximalwert aufweist und die Amplitude der mindestens einen Oberwelle. (OW) einen Minimalwert aufweist.

9. Anordnung nach Anspruch 8,
**dadurch gekennzeichnet,**
**daß** ein einstellbarer Verstärker (2) vorgesehen ist, der das Datensignal (DS) in ein Modulationssignal (U_{DAT}) umsetzt, und daß das Modulationssignal (U_{DAT}) auf einen Maximalwert geregelt wird, bei dem entweder die Amplitude der Grundwelle (GW) ein Maximum aufweist oder die Amplitude der Grundwelle (GW) ein Maximum und die Amplitude der mindestens einen Oberwelle (OW) ein Minimum aufweist.

10. Anordnung nach Anspruch 8 oder 9,
**dadurch gekennzeichnet,**
**daß** den Filtern (BP1, BP2) als Meßwandler (9, 11) Leistungsmesser nachgeschaltet sind.

## Claims

1. Method for amplitude modulation of an optical signal (OS) with a binary data signal (DS), in which these signals are supplied to a modulator (4) for producing a transmission signal (OSM) whose operating point (U_{BIAS}) is adjustable, in which case a measurement signal (MS), which is tapped off the transmission signal (OSM) or the transmission signal (OSM) is demodulated and is converted to a recovered data signal (DS1) from which the fundamental frequency (GW) and at least one harmonic frequency (OW) are filtered out,
**characterized**
**in that** the signals at the fundamental frequency (GW) which has in each case been filtered out and at least one harmonic frequency (OW) are used to derive a control signal (U_{R1}, U_{R2}) in each case and these control signals control the operating point (U_{BIAS}) of the modulator (4) such that the at least one harmonic frequency (OW) reaches a minimum amplitude or power and the fundamental frequency (GW) reaches a maximum amplitude or power.

2. Method according to Claim 1,
**characterized**
**in that** both a fundamental frequency (GW) and the at least one harmonic frequency (OW) are selected from the recovered data signal (DS1), and in that control signals (U_{R1}, U_{R2}) which are derived from them are used for optimum adjustment of the operating point (U_{BIAS}).

3. Method according to one of the preceding claims,
**characterized**
**in that** the data signal (DS) is converted to a modulation signal (U_{DAT}) which is supplied to the modulator (4), and in that the amplitude of the modulation signal (U_{DAT}) is regulated at a value at which the fundamental frequency (GW) or a control signal (U_{R}) formed from the fundamental frequency(GW) and the inverted harmonic frequency (OW) reaches a maximum.

4. Method according to one of the preceding claims,
**characterized**
**in that** the operating point (U_{BIAS}) or the amplitude of the modulation signal (U_{MOD}) is varied on a trial basis until the fundamental frequency has reached a maximum value or until the fundamental frequency (GW) has reached a maximum value and the harmonic frequency (OW) has reached a minimum value at the same time.

5. Method according to Claim 4,
**characterized**
**in that** the operating point (U_{BIAS}) and the modulation signal (U_{DAT}) are optimally set alternately.

6. Method according to one of the preceding claims,
**characterized**
**in that** the operating point control signal (U_{BIAS}) and the amplitude of the modulation signal (U_{DAT}) are optimized by the frequencies of these signals being swept, and by control being carried out in each case on the basis of the lock-in principle.

7. Method according to one of the preceding claims,
**characterized in that**
the recovered data signal (DS1) is produced by demodulation of an optical received signal (CEM), **in that** the control signals (U_{R1}, U_{R2}) are derived from them, and **in that** the control signals are either supplied to the control device (12) arranged at the transmission end, by which device control signals (U_{BIAS}, U_{DAT}) are transmitted via a service channel (22) to the modulator (4), or are transmitted to a control device which is arranged at the receiving end and which controls the modulator (4) via a service channel (22).

8. Arrangement for amplitude modulation of an optical signal (OS) with a binary data signal (DS), which arrangement has a modulator (4) with an adjustable operating point, at whose output a modulated transmission signal (OSM) is emitted, in which case a control loop is provided, which essentially contains:
a demodulator (6), to which the transmission signal (OSM) or a measurement signal (MS) which corresponds to the transmission signal (OSM) is supplied, in order to recover an electrical data signal (DS1) from it,
a filter (BP1) which selects the fundamental frequency (GW) of the recovered data signal (DS1),
at least one second filter (BP2), which selects at least one harmonic frequency (OW) of the recovered data signal (DS1), and
at least one measurement transducer (9, 11) in order to obtain a control signal (U_{R1}, U_{R2}) in each case from the output signal from the filters (BP1, BP2),
**characterized by**
a control device (12) to which the control signals (U_{R1}, U_{R2}) are supplied and which controls the operating point (U_{BIAS}) of the modulator (4) such that
- the amplitude of the fundamental frequency (GW) is at a maximum value and the amplitude of the at least one harmonic frequency (OW) is at a minimum value.

9. Arrangement according to Claim 8,
**characterized**
**in that** an adjustable amplifier (2) is provided, which converts the data signal (DS) to a modulation signal (U_{DAT}) and in that the modulation signal (U_{DAT}) is regulated at a maximum value at which either the amplitude of the fundamental frequency (GW) is at a maximum or the amplitude of the fundamental frequency (GW) is at a maximum and the amplitude of the at least one harmonic frequency (OW) is at a minimum.

10. Arrangement according to Claim 8 or 9,
**characterized**
**in that** the filters (BP1, BP2) are followed by power measurement devices as the measurement transducers (9, 11).

## Revendications

1. Procédé pour la modulation d'amplitude d'un signal optique (OS) avec un signal de données (DS) binaire, selon lequel ces signaux sont amenés à un modulateur (4) pour la génération d'un signal de transmission (OSM), dont le point de travail (U_{BIAS}) est réglable, un signal de mesure (MS) dérivé du signal de transmission (OSM) ou le signal de transmission (OSM) étant démodulé et converti en un signal de données (DS1) récupéré, à partir duquel l'onde fondamentale (GW) et au moins une harmonique (OW) sont filtrées,
**caractérisé en ce que**
à partir des signaux de l'onde fondamentale (GW) respectivement filtrée et d'au moins une harmonique (OW), on déduit à chaque fois un signal de réglage (U_{R1}, U_{R2}) et ces signaux de réglage règlent le point de travail (U_{BIAS}) du modulateur (4) de telle sorte que la au moins une harmonique (OW) et l'onde fondamentale (GW) atteignent respectivement une amplitude ou une puissance minimale et une amplitude ou une puissance maximale.

2. Procédé selon la revendication 1,
**caractérisé en ce que**
aussi bien l'onde fondamentale (GW) que la au moins une harmonique (OW) sont sélectionnées à partir du signal de données (DS1) récupéré et que des signaux de réglage (U_{R1}, U_{R2}) déduits de ce signal sont utilisés pour le réglage optimal du point de travail (U_{BIAS}).

3. Procédé selon l'une quelconque des revendications précédentes,
**caractérisé en ce que**
le signal de donnée (DS) est converti en un signal de modulation (U_{DAT}) qui est amené au modulateur (4) et **en ce que** l'amplitude du signal de modulation (U_{DAT}) est réglée sur une valeur, avec laquelle l'onde fondamentale (GW) ou un signal de réglage (U_{R}) formé de l'onde fondamentale (GW) et de l'harmonique (OW) inversée atteint un maximum.

4. Procédé selon l'une quelconque des revendications précédentes,
**caractérisé en ce que**
à titre d'essai le point de travail (U_{BIAS}) ou l'amplitude du signal de modulation (U_{MOD}) est modifié jusqu'à ce que l'onde fondamentale ait atteint une valeur maximale ou jusqu'à ce que l'onde fondamentale (GW) ait atteint une valeur maximale et simultanément l'harmonique (OW) ait atteint une valeur minimale.

5. Procédé selon la revendication 4,
**caractérisé en ce que**
alternativement le point de travail (U_{BIAS}) et le signal de modulation (U_{DAT}) sont réglés de façon optimale.

6. Procédé selon l'une quelconque des revendications précédentes,
**caractérisé en ce que**
le signal de commande du point de travail (U_{BIAS}) et l'amplitude du signal de modulation (U_{DAT}) sont optimisés en vobulant ces signaux et en effectuant à chaque fois un réglage selon le principe lock-in.

7. Procédé selon l'une quelconque des revendications précédentes,
**caractérisé en ce que**
le signal de donnée (DS1) récupéré est généré par démodulation d'un signal de réception (OEM) optique, **en ce que** les signaux de réglage (U_{R1}, U_{R2}) sont déduits de ces signaux et **en ce que** les signaux de réglage sont guidés vers l'appareil de réglage (12) disposé côté émission, par lequel des signaux de commande (U_{BIAS}, U_{DAT}) sont transmis au moyen d'un canal de service (22) au modulateur (4) ou sont transmis à un appareil de réglage disposé côté émission, qui commande le modulateur (4) au moyen d'un canal de service (22).

8. Dispositif pour la modulation d'amplitude d'un signal optique (OS) avec un signal de données binaire (DS), qui présente un modulateur (4) avec un point de travail réglable, à la sortie duquel un signal de transmission (OSM) modulé est délivré,
un circuit de réglage qui contient pour l'essentiel les éléments suivants étant prévu :
un démodulateur (6), auquel le signal de transmission, (OSM) ou un signal de mesure (MS) correspondant au signal de transmission (OSM) est amené, afin d'en récupérer un signal de données électrique (DS1),
un filtre (BP1), qui sélectionne l'onde fondamentale (GW) du signal de données récupéré (DS1),
au moins un second filtre (BP2), qui sélectionne au moins une harmonique (OW) du signal de données récupéré (DS1) et
au moins un convertisseur de mesure (9, 11) afin d'obtenir à chaque fois un signal de réglage (U_{R1}, U_{R2}) à partir du signal de sortie des filtres (BP1, BP2),
**caractérisé par**
un appareil de réglage (12), auquel les signaux de réglage (U_{R1}, U_{R2}) sont amenés et qui règle le point de travail (U_{BIAS}) du modulateur (4) de telle sorte que
- l'amplitude de l'onde fondamentale (GW) présente une valeur maximale et l'amplitude de la au moins une harmonique (OW) présente une valeur minimale.

9. Dispositif selon la revendication 8,
**caractérisé en ce que**
un amplificateur (2) réglable est prévu, qui convertit le signal de données (DS) en un signal de modulation (U_{DAT}) et **en ce que** le signal de modulation (U_{DAT}) est réglé sur la valeur maximale pour laquelle, soit l'amplitude de l'onde fondamentale (GW) présente un maximum, soit l'amplitude de l'onde fondamentale (GW) présente un maximum et l'amplitude de la au moins une harmonique (OW) présente un minimum.

10. Dispositif selon la revendication 8 ou 9,
**caractérisé en ce que**
des indicateurs de puissance sont montés en aval des filtres (BP1, BP2) comme convertisseurs de mesure (9, 11).
